# FASCICULE DE BREVET EUROPEEN

(11) **EP 1 320 163 B1**
(45) Date de publication et mention de la délivrance du brevet: **11.05.2016**
(21) Numéro de dépôt: 02293064.8
(22) Date de dépôt: 11.12.2002
(51) Int. Cl.: H02G 3/12

(54) **Accessoire d'immobilisation d'un appareillage électrique ä clipsage direct dans un socle de goulotte**
Immobilisierungszubehör für ein elektrisches Installationsgerät mit Direktschnappverbindung in einem Kabelrinnesockel
Locking accessory for a direct snap-on electrical apparatus in a raceway base

(30) Priorité: 14.12.2001 FR 0116223
(43) Date de publication de la demande: 18.06.2003
(73) Titulaire: PLANET WATTOHM, 60300 Senlis (FR)
(72) Inventeur: Destruel, Marc, 60700 Fleurines (FR); Marcou, Jean-Claude, 87000 Limoges (FR); Couzinet, Didier, 60320 Bethisy Saint Pierre (FR)
(74) Mandataire: Santarelli

(56) Documents cités:
- EP-A- 0 838 885
- EP-A- 1 059 718
- FR-A- 2 756 431

## Description

La présente invention concerne un accessoire d'immobilisation d'au moins un appareillage électrique rapporté dans une ouverture longitudinale d'un socle de goulotte en étant clipsé directement sur des bandes de clipsage parallèles bordant ladite ouverture longitudinale.

Plus particulièrement, cet accessoire d'immobilisation comprend un élément rigide apte à être rapporté, à côté d'un tel appareillage, transversalement dans ladite ouverture longitudinale du socle de goulotte pour stabiliser localement la largeur de ladite ouverture longitudinale, cet élément rigide comprenant, sur deux côtés parallèles, des moyens d'accrochage destinés à coopérer avec lesdites bandes de clipsage.

On connaît déjà du document FR 2 756 431 appartenant à la demanderesse un accessoire d'immobilisation du type précité. Le document EP-A1-0838885 décrit une agrafe de retenue à rapporter localement sur une goulotte, de l'un à l'autre de deux retours en équerre de celle-ci. Le document EP-A1-1059718 décrit un accessoire d'immobilisation d'un appareillage éléctrique conforme au préambule de la revendication 1.

Un tel accessoire déjà connu comporte en outre un moyen de verrouillage qui consiste en des vis engagées dans des trous pratiqués au voisinage des moyens d'accrochage de l'élément rigide. Ces vis sont autotaraudeuses et sont aptes à venir mordre les bandes de clipsage pour bloquer en translation l'accessoire d'immobilisation et immobiliser les mécanismes d'appareillage suivant la direction de l'axe du socle de goulotte.

Pour mettre en place ce moyen de verrouillage, il convient de visser, de chaque côté de l'élément rigide, les vis, ce qui est complexe et représente un certain temps d'installation.

En outre, les vis qui sont des pièces supplémentaires peuvent être égarées avant d'être vissées dans l'élément rigide.

Par rapport à l'état de la technique précité, l'invention propose un nouvel accessoire d'immobilisation qui comporte des moyens de verrouillage simples, faciles et rapides à mettre en oeuvre par un installateur.

Plus particulièrement, dans l'accessoire d'immobilisation selon l'invention, ledit élément rigide porte au moins un levier de verrouillage dont une extrémité est pourvue d'une surface d'appui sur une desdites bandes de clipsage, ledit levier de verrouillage étant apte à pivoter entre deux positions, à savoir une position de repos dans laquelle ladite surface d'appui est placée à distance de ladite bande de clipsage et une position de verrouillage dans laquelle ladite surface d'appui s'applique contre ladite bande de clipsage en exerçant un effort de pression sur celle-ci pour bloquer ledit élément rigide en position sur le socle de goulotte.

D'autres caractéristiques non limitatives et avantageuses de l'accessoire d'immobilisation selon l'invention sont les suivantes :
- la surface d'appui de chaque levier de verrouillage est conformée de manière à prendre également appui sous la bande de clipsage correspondante ;
- la surface d'appui de chaque levier de verrouillage présente un profil sensiblement en forme de C ;
- la surface d'appui de chaque levier de verrouillage présente un profil en forme d'angle droit ;
- la surface d'appui de chaque levier de verrouillage porte au moins une nervure ;
- la surface d'appui de chaque levier de verrouillage porte une pluralité de nervures disposées parallèlement les unes aux autres ;
- chaque levier de verrouillage est d'un seul tenant avec l'élément rigide et est relié à ce dernier par une partie souple formant charnière d'articutation ;
- chaque levier de verrouillage est rapporté sur l'élément rigide par l'intermédiaire de moyens de montage formant charnière d'articulation ;
- il est prévu deux leviers de verrouillage ;
- les deux leviers de verrouillage présentent des axes d'articulation distincts ;
- les deux leviers de verrouillage présentent un axe d'articulation commun ;
- les deux leviers de verrouillage sont identiques ;
- les deux leviers de verrouillage sont différents ;
- l'élément rigide porte, en saillie, un crochet coopérant avec ledit levier de verrouillage pour le maintenir en position de verrouillage ;
- chaque levier de verrouillage pivote dans un plan perpendiculaire au fond du socle de goulotte de sorte que la position de repos de chaque levier de verrouillage est une position relevée dans laquelle il s'élève sensiblement perpendiculairement audit élément rigide, et la position de verrouillage de chaque levier de verrouillage est une position rabattue dans laquelle il s'étend dans le plan de l'élément rigide ;
- chaque levier de verrouillage pivote dans un plan sensiblement parallèle au fond du socle de goulotte de sorte que la position de repos de chaque levier de verrouillage est une position écartée latéralement de l'axe de l'élément rigide, et la position de verrouillage est une position rapprochée dans laquelle il s'étend sensiblement suivant l'axe de l'élément rigide ;
- l'accessoire d'immobilisation comporte un capuchon à rapporter par encliquetage sur l'élément rigide ;
- il est prévu, sur une des deux pièces constituées par le capuchon et l'élément rigide, une série de crantages destinés à coopérer avec un cran complémentaire prévu sur l'autre des deux pièces de sorte que le capuchon peut prendre différentes positions suivant une direction perpendiculaire à l'axe longitudinal du socle de goulotte par rapport à l'élément rigide ;
- au moins un levier de verrouillage fait office de capuchon de l'élément rigide ;
- ledit élément rigide comporte, le long d'au moins un côté perpendiculaire à ceux qui comprennent lesdits moyens d'accrochage, un bandeau d'appui conformé pour venir se placer sous un enjoliveur d'un appareillage électrique rapporté dans l'ouverture longitudinale du socle de goulotte ;
- ledit élément rigide comporte, le long de chaque côté perpendiculaire à ceux qui comprennent lesdits moyens d'accrochage, un bandeau d'appui ;
- les deux bandeaux d'appui présentent des largeurs identiques ;
- les deux bandeaux d'appui présentent des largeurs différentes ; et
- l'élément rigide comporte sur au moins un bandeau d'appui des moyens de butée et de positionnement d'un appareillage électrique monté dans l'ouverture longitudinale du socle de goulotte.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un côté d'un premier mode de réalisation de l'élément rigide de l'accessoire d'immobilisation selon l'invention ;
- la figure 2 est une vue schématique en perspective de l'autre côté de l'élément rigide de la figure 1 ;
- la figure 3 est une vue de dessous de l'élément rigide de la figure 1 ;
- la figure 4 est une vue en perspective du capuchon apte à être positionné sur l'élément rigide de la figure 1 ;
- la figure 5 est une vue en coupe transversale d'un socle de goulotte dans lequel est positionné l'élément rigide représenté sur la figure 1 avec au-dessus, vu en coupe transversale, le capuchon de la figure 4 ;
- la figure 6A est une vue schématique en perspective de côté d'un deuxième mode de réalisation de l'élément rigide de l'accessoire d'immobilisation selon l'invention ;
- la figure 6B est une vue schématique en perspective de dessous du capuchon apte à être mis en place sur l'élément rigide de la figure 6A ;
- la figure 7 est une vue en coupe transversale d'un socle de goulotte dans lequel est rapporté l'élément rigide représenté sur la figure 6A avec au-dessus, vu en coupe transversale, le capuchon de la figure 6B ;
- la figure 8 est une vue schématique en perspective d'un tronçon de socle de goulotte dans lequel sont clipsés deux appareillages électriques séparés l'un de l'autre par l'accessoire d'immobilisation représenté sur la figure 5 ;
- la figure 9 est une vue en coupe longitudinale selon le plan A-A de la figure 8 ;
- la figure 10 est une vue schématique en perspective d'un tronçon de socle de goulotte dans lequel est clipsé un appareillage électrique et fermé partiellement par un tronçon de couvercle, un accessoire d'immobilisation, tel que représenté sur la figure 5, étant rapporté entre l'appareillage électrique et l'extrémité coupée du tronçon de couvercle ;
- la figure 11 est une vue schématique en coupe longitudinale selon le plan B-B de la figure 10 ;
- la figure 12 est une vue schématique en perspective d'un tronçon de socle de goulotte dans lequel sont clipsés deux appareillages électriques séparés l'un de l'autre par une variante de l'accessoire d'immobilisation selon l'invention ; et
- la figure 13 est une vue schématique en perspective de côté d'un troisième mode de réalisation de l'élément rigide de l'accessoire d'immobilisation selon l'invention.

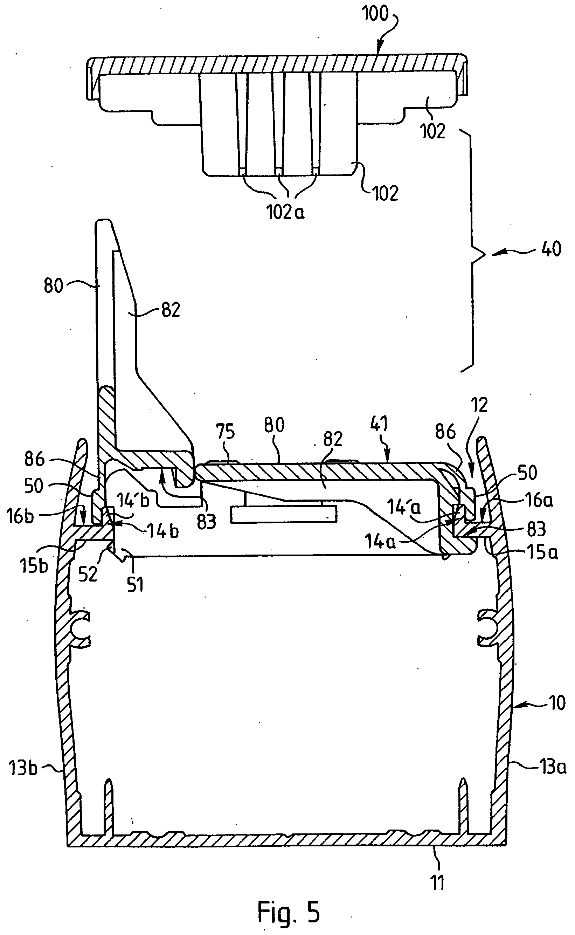

Sur les figures 5 et 7 à 11, on a représenté une goulotte 10 d'alimentation électrique qui comporte un socle de goulotte 11 à section globalement en U avec un fond et deux parois longitudinales 13a, 13b parallèles rattachées au fond perpendiculairement à celui-ci.

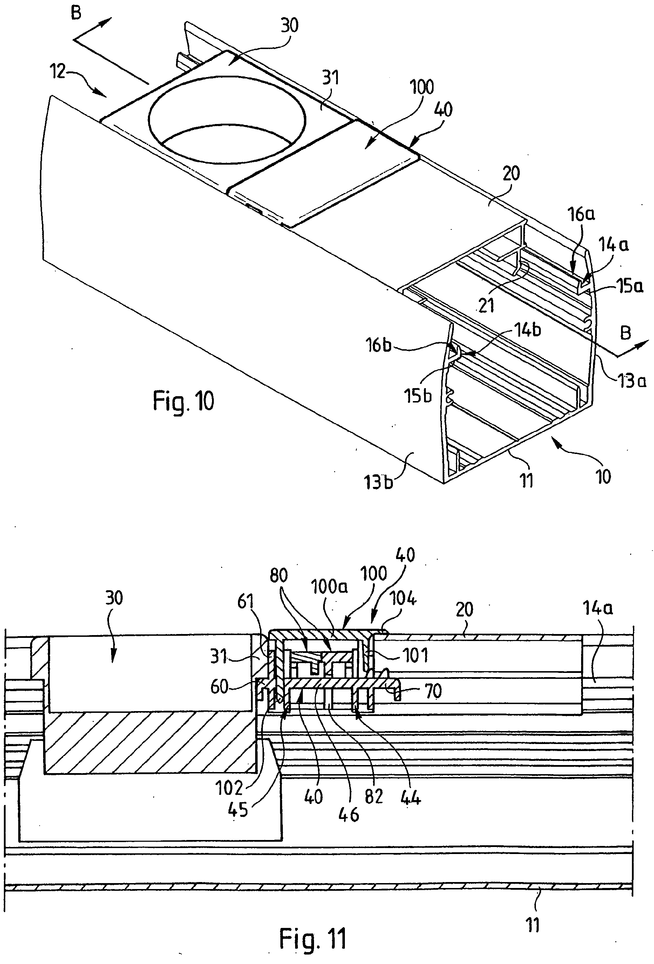

Entre les parois longitudinales 13a, 13b parallèles est définie une ouverture longitudinale 12. L'ouverture longitudinale 12 du socle de goulotte 11 est fermée par un tronçon de couvercle 20 (voir figure 10).

Les nervures et aménagements internes du socle de goulotte ne faisant pas partie à proprement parler de l'invention, ils ne seront pas décrits ici dans le détail.

Chaque paroi longitudinale 13a, 13b porte, à proximité de son extrémité libre, une bande de clipsage 14a, 14b qui s'étend parallèlement à ladite paroi longitudinale, selon l'axe longitudinal de la goulotte, et court tout au long de celle-ci. Les deux bandes de clipsage 14a, 14b bordent l'ouverture longitudinale 12 du socle de goulotte 11 et sont parallèles entre elles.

Chaque bande de clipsage 14a, 14b est rattachée à la paroi longitudinale 13a, 13b correspondante par une entretoise longitudinale 15a, 15b, qui s'étend parallèlement au fond du socle de goulotte 11, et qui court sur toute la longueur de la goulotte.

Chaque entretoise longitudinale 15a, 15b définit, avec la paroi longitudinale 13a, 13b et la bande de clipsage 14a, 14b correspondantes, une gorge longitudinale 16a, 16b qui sert notamment au montage du tronçon de couvercle 20.

Comme le montre plus particulièrement la figure 10, à cet effet, le tronçon de couvercle 20 comporte, en tant que moyen de montage, sur chacun de ses bords longitudinaux d'extrémité, une languette longitudinale rigide destinée à s'engager dans la gorge longitudinale 16a, 16b correspondante et une dent d'encliquetage 21 destinée à s'encliqueter sous la bande de clipsage 14a, 14b correspondante.

Comme on peut le remarquer, selon un premier mode de réalisation du socle de goulotte 11 représenté sur la figure 5, chaque bande de clipsage 14a, 14b s'étend à partir de l'entretoise longitudinale 15a, 15b vers l'avant du socle de goulotte 11 de sorte qu'elle forme seulement une partie saillante 14'a, 14'b s'élevant au-dessus de l'entretoise longitudinale 15a, 15b correspondante, une surface plane étant prévue en dessous de ladite gorge longitudinale 16a, 16b.

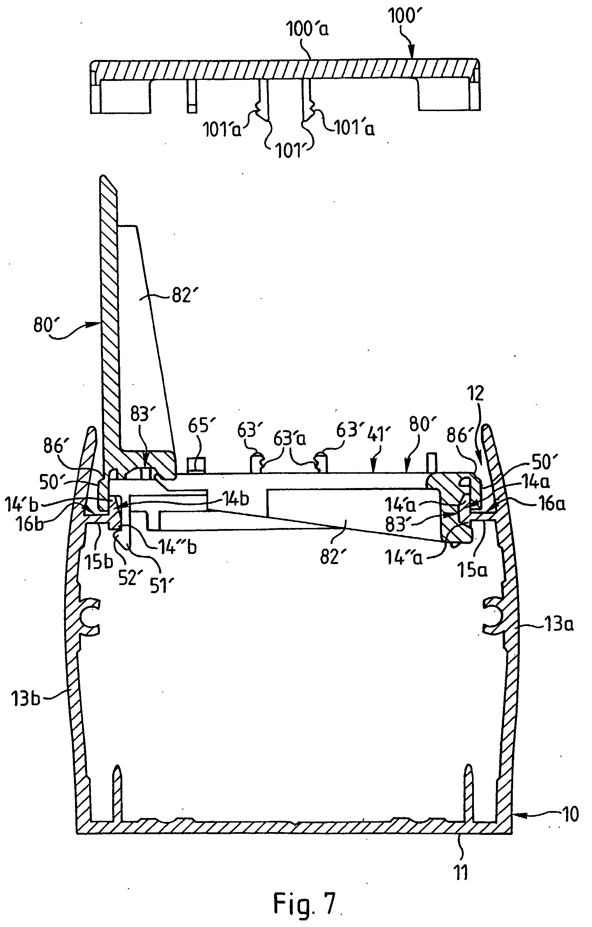

Selon un second mode de réalisation du socle de goulotte 11 représenté sur la figure 7, chaque bande de clipsage 14a, 14b forme, d'une part, une partie saillante 14'a, 14'b s'élevant au-dessus de l'entretoise longitudinale 15a, 15b correspondante vers l'extérieur du socle de goulotte 11, et, d'autre part, une nervure 14"a, 14"b faisant saillie longitudinalement en dessous de ladite entretoise longitudinale 15a, 15b vers l'intérieur du socle de goulotte 11.

Chaque bande de clipsage 14a, 14b, qu'elle soit conformée selon le premier mode de réalisation ou selon le second mode de réalisation précité, est destinée au clipsage direct d'appareillages électriques 30 dans l'ouverture longitudinale 12 du socle de goulotte 11.

A cet effet, chaque appareillage électrique 30 comporte des pattes et des dents de clipsage destinées à coopérer avec les bandes de clipsage 14a, 14b correspondantes.

Ainsi, chaque appareillage électrique 30 est à clipsage direct dans la mesure où il vient s'encastrer, sans mise en oeuvre de moyens de fixation particuliers, dans l'ouverture longitudinale 12 du socle de goulotte 11 à l'emplacement choisi par l'installateur, l'enjoliveur 31 de l'appareillage électrique 30 venant en appui directement ou indirectement contre les bandes de clipsage 14a, 14b, et les dents de clipsage de chaque appareillage électrique venant en butée soit contre les nervures 14"a, 14"b de la bande de clipsage, soit contre la surface plane située en dessous de la gorge longitudinale 16a, 16b correspondante.

La flexibilité naturelle du socle de goulotte 11 peut aboutir, en cas de contrainte, à un écartement des deux parois longitudinales 13a, 13b parallèles, c'est-à-dire à un élargissement de l'ouverture longitudinale 12 préjudiciable à la bonne tenue de chaque appareillage électrique 30.

C'est pourquoi, selon l'invention, on prévoit un accessoire d'immobilisation 40, 40' destiné à être mis en place dans l'ouverture longitudinale 12 du socle de goulotte 11 à proximité de chaque appareillage électrique 30 pour empêcher, au moins localement, l'écartement de l'ouverture longitudinale 12 du socle de goulotte 11.

Pour obtenir ce résultat, il suffit d'un seul accessoire d'immobilisation 40, 40' installé à côté de chaque appareillage électrique 30, mais il est préférable d'en disposer deux de part et d'autre de celui-ci. Lorsque plusieurs appareillages électriques sont montés côte à côte dans le socle de goulotte, plusieurs accessoires d'immobilisation sont disposés judicieusement entre lesdits appareillages de manière à obtenir une bonne rigidité des parois longitudinales du socle de goulotte.

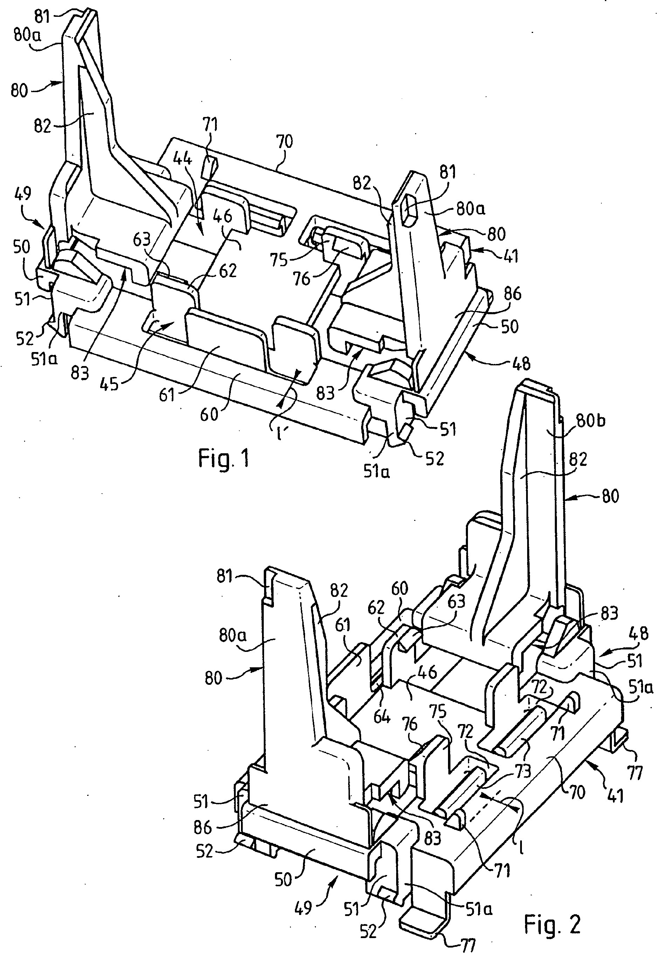

Sur les figures 1 à 5, on a représenté un premier mode de réalisation d'un tel accessoire d'immobilisation 40.

Cet accessoire d'immobilisation 40 comprend, essentiellement, un élément rigide 41, ici réalisé d'une seule pièce en matière plastique moulée, complété par un capuchon 100 également réalisé en matière plastique moulée.

Comme le montrent plus particulièrement les figures 1 à 3, l'élément rigide 41 comporte une paroi médiane 46 apte à s'étendre parallèlement au plan de l'ouverture longitudinale 12 du socle de goulotte 11 et, de part et d'autre de cette paroi médiane 46, des bandes de raidissement 44, 45 venues de moulage et qui s'étendent généralement transversalement aux deux côtés latéraux opposés 48, 49 parallèles dudit élément rigide 41. Ces deux côtés latéraux opposés 48, 49 sont pourvus de moyens d'accrochage 50, 51, 52 destinés à coopérer avec lesdites bandes de clipsage 14a, 14b.

Plus particulièrement, sur chacun des côtés latéraux opposés 48, 49 parallèles de l'élément rigide 41, il est prévu, en tant que moyen d'accrochage, une partie plate en saillie 50 formant un crochet rigide, défini le long dudit côté, allongé suivant la direction longitudinale du socle de goulotte 11 et conformé pour s'emboîter dans la gorge longitudinale 16a, 16b correspondante de ce dernier.

En outre, sur chacun des côtés latéraux opposés 48, 49 parallèles de l'élément rigide 41, il est prévu, en tant que moyens d'accrochage, deux pattes souples 51 positionnées de part et d'autre de la partie plate en saillie 50 et portant chacune une dent 52 à une extrémité libre.

Cette dent 52 est conformée pour prendre appui soit sur la surface plane située en dessous de la gorge longitudinale 16a, 16b correspondante (voir figure 5), soit sur la nervure 14"a, 14"b faisant saillie longitudinalement vers l'intérieur du socle de goulotte 11 (voir figure 7).

Bien entendu, on pourrait prévoir, en variante, une seule patte souple à dent d'encliquetage située sur un seul côté latéral dudit élément rigide, l'autre côté latéral opposé de celui-ci étant exempt d'une telle patte souple et comportant seulement ladite partie plate en saillie formant crochet.

En outre, l'élément rigide 41 comprend, avantageusement, des moyens de verrouillage destinés à le bloquer en position sur le socle de goulotte 11 et éviter ultérieurement qu'il puisse être translaté malencontreusement selon l'axe longitudinal dudit socle.

Selon le mode de réalisation représenté sur les figures 1 à 5, les moyens de verrouillage comprennent deux leviers de verrouillage 80 identiques, chaque levier de verrouillage 80 étant rattaché à un desdits côtés latéraux opposés 48, 49 parallèles de l'élément rigide 41.

Ici, avantageusement, le rattachement de chaque levier de verrouillage 80 est réalisé par une partie souple 86 formant charnière d'articulation du levier de verrouillage 80. Chaque levier de verrouillage 80 est d'un seul tenant avec l'élément rigide 41 et la partie souple 86 formant charnière d'articulation vient donc de formation avec le levier de verrouillage 80 et l'élément rigide 41.

Bien entendu, selon une variante non représentée, on peut prévoir que chaque levier de verrouillage soit rapporté sur l'élément rigide par l'intermédiaire de moyens mécaniques de montage formant charnière d'articulation.

Comme le montrent plus particulièrement les figures 1 et 2, chaque levier de verrouillage 80 s'étend à partir d'un côté latéral 48, 49 de l'élément rigide 41 en direction de l'autre côté latéral opposé 48, 49, sur la majeure partie de la longueur de l'élément rigide 41 et transversalement à l'axe longitudinal du socle de goulotte 11.

Chaque levier de verrouillage 80 porte, sur une face 80b tournée vers l'intérieur du socle de goulotte 11, une nervure longitudinale de raidissement 82. En outre, chaque levier de verrouillage 80 porte, à une extrémité libre, sur une face 80a tournée vers l'extérieur du socle de goulotte 11, un décrochement 81.

Chaque levier de verrouillage 80 comporte, à une extrémité située à l'opposé de son extrémité libre, c'est-à-dire du côté de la partie souple 86 formant charnière d'articulation, une surface d'appui 83 destinée à s'appliquer sur une bande de clipsage 14a, 14b correspondante.

Avantageusement, chaque levier de verrouillage 80 est apte à pivoter entre deux positions, à savoir une position de repos dans laquelle ladite surface d'appui 83 est placée à distance de ladite bande de clipsage 14a, 14b (voir figures 2 et 5, le levier de verrouillage 80 étant en position relevée) et une position de verrouillage dans laquelle ladite surface d'appui 83 s'applique contre ladite bande de clipsage 14a, 14b correspondante en exerçant un effort de pression sur celle-ci pour bloquer ledit élément rigide en position sur le socle de goulotte 11 (voir figure 5, le levier de verrouillage 80 étant en position rabattue).

Selon le mode de réalisation représenté sur les figures 1 à 5, les leviers de verrouillage 80 identiques présentent des axes d'articulation distincts et parallèles.

Les axes d'articulation des leviers de verrouillage 80 sont parallèles à l'axe longitudinal du socle de goulotte de sorte que lesdits leviers de verrouillage pivotent dans des plans perpendiculaires au fond du socle de goulotte.

Ainsi, dans leur position de repos, ils sont en position relevée en s'étendant sensiblement perpendiculairement à l'élément rigide 41 et, dans leur position de verrouillage, ils sont rabattus en s'étendant sensiblement dans le plan de l'élément rigide 41.

La surface d'appui 83 de chaque levier de verrouillage 80 est conformée de manière à prendre également appui sous la bande de clipsage 14a, 14b correspondante.

Selon le mode de réalisation représenté sur les figures 1 à 5, la surface d'appui 83 de chaque levier de verrouillage 80 présente un profil en forme d'angle droit adapté au profil extérieur d'angle droit formé par la bande de clipsage 14a, 14b correspondante et l'entretoise longitudinale 15a, 15b à laquelle la bande de clipsage est rattachée.

Lorsque chaque bande de clipsage 14a, 14b forme également une nervure 14"a, 14"b rentrant vers l'intérieur du socle de goulotte 11, chaque surface d'appui 83' de chaque levier de verrouillage 80' de l'élément rigide 41' présente un profil sensiblement en forme de C qui épouse la forme externe de la bande de clipsage 14a, 14b (voir figure 7).

Avantageusement, chaque surface d'appui 83 de chaque levier de verrouillage 80 comporte, dans sa partie formant retour par rapport à sa partie principale, une série de nervures 84 destinées à augmenter encore l'effort de pression ou de compression exercé par ladite surface d'appui 83 sur la bande de clipsage 14a, 14b correspondante lorsque le levier de verrouillage 80 est en position de verrouillage. Ces nervures 84 sont disposées avantageusement parallèlement les unes aux autres, sur toute la largeur de la surface d'appui 83 correspondante.

Bien entendu, selon une variante non représentée, une seule nervure peut suffire à augmenter un tel effort de pression sur la bande de clipsage correspondante.

En outre, avantageusement, l'élément rigide 41 porte, de part et d'autre de la paroi médiane 46, une patte rigide 62, 75 qui porte une dent 63, 76.

Chaque patte rigide 62, 75 s'élève au-dessus de la paroi médiane 46, perpendiculairement à celle-ci.

Ces pattes rigides 62, 75 portant les dents 63, 76 forment des crochets coopérant avec les leviers de verrouillage 80 pour les maintenir en position de verrouillage, rabattus sur l'élément rigide 41.

A cet effet, chaque dent 63, 76 vient prendre appui dans le décrochement 81 correspondant prévu à l'extrémité libre du levier de verrouillage 80 correspondant.

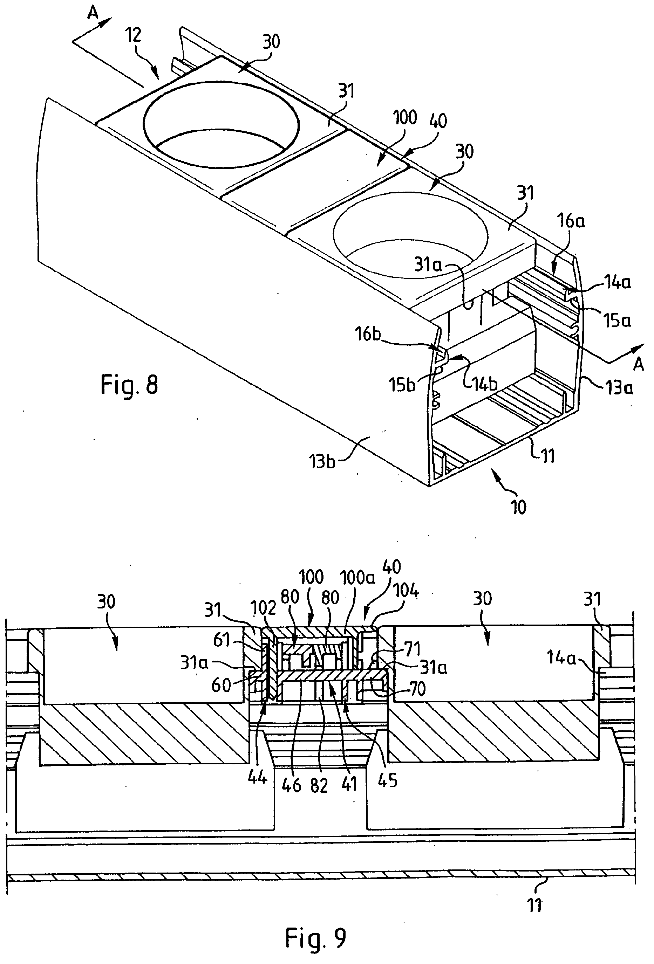

Par ailleurs, l'élément rigide 41 comporte, le long des deux côtés longitudinaux, perpendiculaires aux côtés latéraux 48, 49 qui comprennent lesdits moyens d'accrochage, des bandeaux d'appui 60, 70 conformés pour venir se placer directement ou indirectement sous un enjoliveur 31 d'un appareillage électrique 30 rapporté dans l'ouverture longitudinale 12 du socle de goulotte (voir figures 9 et 11).

Selon le mode de réalisation représenté sur les figures 1 et 2, les deux bandeaux d'appui 60, 70 n'ont pas la même largeur, le bandeau d'appui 70 étant plus large que le bandeau d'appui 60.

Le bandeau d'appui 70 le plus large porte en saillie ici deux butées 71 destinées à permettre le positionnement d'un appareillage électrique 30 monté dans l'ouverture longitudinale 12 du socle de goulotte 11.

Les butées 71 sont relativement espacées les unes des autres. En outre, dans le bandeau d'appui 70, il est prévu deux ouvertures 72 dans chacune desquelles émerge un cran 73 pour le montage du capuchon 100 de l'accessoire d'immobilisation 40.

Du côté du bandeau d'appui 60, il est prévu en saillie une paroi de guidage 61 servant au guidage du capuchon 100 lors de son montage sur l'élément rigide. Entre cette paroi de guidage 61 et ladite patte rigide 62 est définie une ouverture 64 dans laquelle est destinée à s'engager une plaque de guidage 102 portée par le capuchon 100.

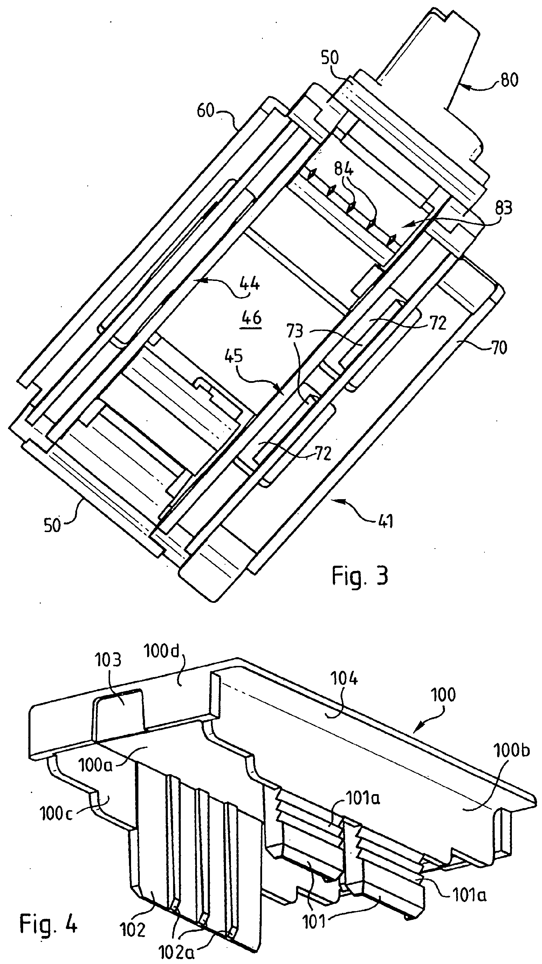

Plus particulièrement, le capuchon 100 représenté sur la figure 4 comporte une paroi centrale de recouvrement 100a destinée à recouvrir l'élément rigide 41

Une fois que les leviers de verrouillage 80 sont rabattus sur l'élément rigide (voir figure 9 par exemple), cette paroi centrale de recouvrement 100a s'étend sensiblement parallèlement au fond du socle de goulotte 11.

Cette paroi centrale de recouvrement 100a porte, sur ses bords longitudinaux, deux parois 100b, 100c s'étendant sensiblement perpendiculairement à celle-ci. La paroi 100b porte deux pattes 101 munies chacune d'une série de crantages 101 a destinés à coopérer avec les crans 73 logés dans les ouvertures 72 du bandeau d'appui 70 de l'élément rigide 41.

L'autre paroi 100c du capuchon 100 parallèle à la paroi 100b porte une plaque de guidage 102 pourvue de nervures longitudinales 102a parallèles destinées à se glisser contre la paroi de guidage 61 et à s'engager dans une ouverture 64 correspondante de l'élément rigide 41 située entre la paroi de guidage 61 et la patte rigide 62 portant la dent 63 formant crochet pour le maintien en position rabattue du levier de verrouillage 80 correspondant.

La plaque de guidage 102 du capuchon 100, qui glisse contre la paroi de guidage 61 de l'élément rigide 41, sert de face d'appui pour obtenir un bon encliquetage des crantages 101a portés par les pattes 101 du capuchon 100 sur les crans 73 prévus dans les ouvertures 72 de l'élément rigide 41.

Le capuchon 100 comporte, sur un côté latéral 100d, une encoche 103 dans laquelle peut être introduite la pointe d'un outil pour désolidariser ledit capuchon 100 de l'élément rigide 41.

Enfin, le capuchon 100 comporte, sur un bord longitudinal situé du côté de ladite paroi 100b, une casquette 104, qui s'étend sur toute la longueur dudit bord longitudinal, et qui est destinée à recouvrir un bord d'extrémité coupé d'un tronçon de couvercle 20 encliqueté sur le socle de goulotte 11 (voir figure 11).

En référence aux figures 8 et 9, nous allons maintenant décrire la mise en place de l'accessoire d'immobilisation 40 entre deux appareillages électriques 30 clipsés directement sur les bandes de clipsage 14a, 14b du socle de goulotte 11.

Tout d'abord, un premier appareillage électrique 30, ici une prise de courant située par exemple à droite sur la figure 9, est clipsé sur les bandes de clipsage 14a, 14b du socle de goulotte 11.

Puis, l'élément rigide 41 est mis en place sur les bandes de clipsage 14a, 14b du socle de goulotte 11 par l'intermédiaire de ses moyens d'accrochage, les leviers de verrouillage 80 étant relevés en position de repos.

Pour l'accrochage de l'élément rigide 41, il suffit de positionner les parties plates en saillie 50 formant crochets dans les gorges longitudinales 16a, 16b et d'encliqueter les pattes souples 51 portant les dents 52 sous les bandes de clipsage 14a, 14b, comme cela a été décrit précédemment.

Puis, les leviers de verrouillage 80 étant en position de repos, l'élément rigide 41 peut être translaté en direction dudit appareillage électrique 30 pour être positionné en appui contre ce dernier.

Dans cette position d'appui, le bandeau d'appui 70 de l'élément rigide est engagé directement ou indirectement sous l'enjoliveur 31 de l'appareillage électrique de telle sorte qu'une partie de la surface du bandeau d'appui 70 recouvre la surface inférieure 31a de l'enjoliveur 31 de l'appareillage électrique 30.

La surface de recouvrement du bandeau d'appui 70 de largeur l s'étend entre le bord longitudinal d'extrémité du bandeau d'appui 70 et les butées 71 portées par celui-ci qui viennent se positionner contre l'enjoliveur 31 de l'appareillage électrique 30 (voir figure 9).

La coopération des parties plates en saillie 50 formant crochets avec les bandes de clipsage 14a, 14b permet à l'élément rigide 41 de stabiliser la largeur de l'ouverture longitudinale 12 du socle de goulotte et d'éviter l'écartement ultérieur des parois longitudinales 13a, 13b du socle de goulotte 11 lors d'un effort de traction exercé sur l'appareillage électrique 30 correspondant.

Une fois que l'élément rigide 41 est positionné en appui contre le premier appareillage électrique 30, les leviers de verrouillage 80 sont rabattus sur l'élément rigide 41 en position de verrouillage de sorte que leur surface d'appui 83 vienne s'appliquer contre la bande de clipsage 14a, 14b correspondante en exerçant un effort de pression sur celle-ci renforcé par les nervures 84 portées par ladite surface d'appui 83.

Ainsi, les leviers de verrouillage 80 permettent de bloquer en position l'élément rigide 41 sur le socle de goulotte 11.

Lorsque chaque levier de verrouillage 80 arrive en position de verrouillage, rabattu sur l'élément rigide 41, il coopère avec les crochets 62, 63, 75, 76 portés par l'élément rigide 41 de façon à ce qu'il soit maintenu dans cette position.

Puis, le deuxième appareillage électrique 30, situé sur la gauche de la figure 9, est mis en place sur le socle de goulotte 11. Cette mise en place est réalisée par un clipsage direct de l'appareillage électrique 30 sur les bandes de clipsage 14a, 14b. L'appareillage électrique 30 est alors translaté pour être mis en appui contre la paroi de guidage 61 de l'élément rigide 41 de telle sorte que la surface inférieure 31a de l'enjoliveur 31 de l'appareillage électrique 30 recouvre sur une largeur l' une partie du bandeau d'appui 60 dudit élément rigide 41.

Enfin, il suffit d'encliqueter le capuchon 100 sur l'élément rigide 41 à une hauteur telle que la face externe de sa paroi centrale de recouvrement 100a vienne se placer à effleurement de la face externe des enjoliveurs 31 des appareillages électriques 30, comme cela est plus particulièrement représenté sur les figures 8 et 9.

Il est à noter que l'élément rigide 41 de l'accessoire d'immobilisation 40 représenté sur les figures 1 et 2 comporte, à chaque extrémité du bandeau d'appui 70, une petite languette en angle droit 77 destinée à s'engager sous la bande de clipsage 14a, 14b correspondante et permettant de répondre aux normes en vigueur concernant l'introduction ultérieure d'objets non prévus à cet effet à l'intérieur du socle de goulotte 11.

En effet, chaque petite languette en angle droit 77 forme un obstacle à l'introduction, à cet endroit, entre le capuchon et l'élément rigide 41, d'un objet du type fil de fer ou autre.

Les bandeaux d'appui 60, 70 forment également une étanchéité au niveau de la jonction entre chaque appareillage électrique 30 et l'élément rigide 41, ce qui permet d'éviter également l'introduction ultérieure d'objets à l'intérieur du socle de goulotte.

Le capuchon 100 permet de parfaire l'esthétique de l'ensemble et d'assurer également une étanchéité.

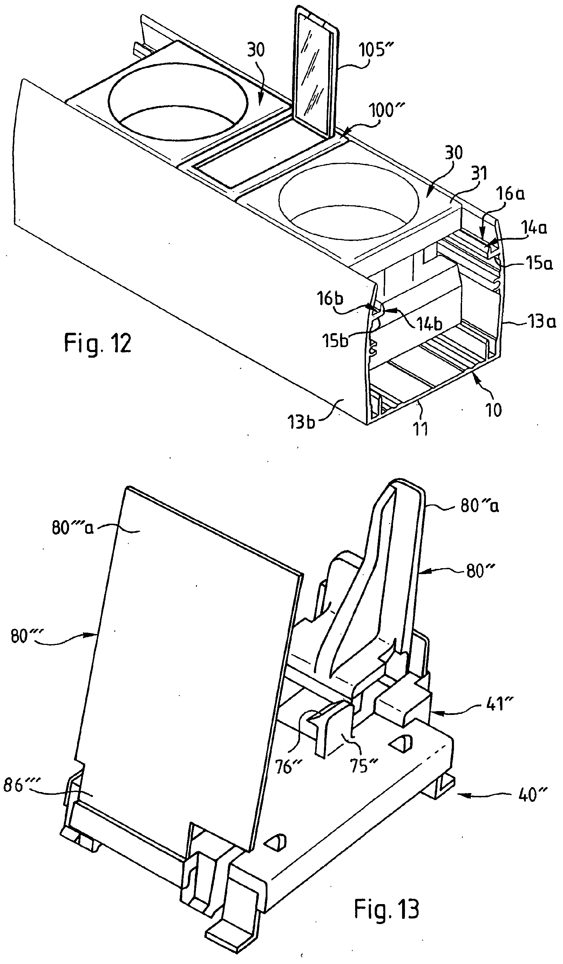

Comme le montre une variante représentée sur la figure 12, le capuchon 100" peut comporter un logement pour une étiquette refermé par une paroi transparente 105" qui est montée à pivotement sur ledit capuchon 100" ou qui est rapportée par encliquetage sur ledit capuchon suivant une direction perpendiculaire au fond du socle de goulotte.

En référence aux figures 10 et 11, nous allons maintenant décrire la mise en place de l'accessoire d'immobilisation 40 selon l'invention entre un appareillage électrique 30 et un tronçon de couvercle 20.

Le montage de l'appareillage électrique 30 et de l'élément rigide 41 de l'accessoire d'immobilisation 40 dans le socle de goulotte 11 est identique à ce qui vient d'être décrit précédemment et ne sera pas une nouvelle fois décrit ici.

Il suffit de dire que l'appareillage électrique 30, positionné sur la gauche de la figure 11, est mis en place par clipsage direct sur les bandes de clipsage 14a, 14b du socle de goulotte 11 puisque l'élément rigide 41 de l'accessoire d'immobilisation 40 est clipsé sur les bandes de clipsage 14a, 14b et est coulissé de façon à ce que son bandeau d'appui 60 vienne buter contre l'appareillage électrique 30 de sorte que l'enjoliveur 31 recouvre ledit bandeau d'appui sur une surface de largeur l'.

Une fois que l'élément rigide 41 est mis en place sur le socle de goulotte 11, il est verrouillé en position grâce aux leviers de verrouillage 80 rabattus sur l'élément rigide 41, comme cela a été décrit précédemment.

Le tronçon de couvercle 20 est alors clipsé sur les parois longitudinales 13a, 13b du socle de goulotte 11 et est coulissé jusqu'à ce que son bord d'extrémité coupé vienne buter contre la tranche 51 a des pattes souples 51 portées par l'élément rigide 41 du côté du bandeau d'appui 70.

Puis, le capuchon 100 est mis en place sur l'élément rigide 41 de la même manière que cela a été décrit précédemment et est enfoncé jusqu'à ce que sa casquette 104 vienne s'appuyer contre la face externe du tronçon de couvercle 20 en formant un joint d'étanchéité permettant d'éviter l'introduction ultérieure à cet endroit d'objet à l'intérieur du socle de goulotte 11.

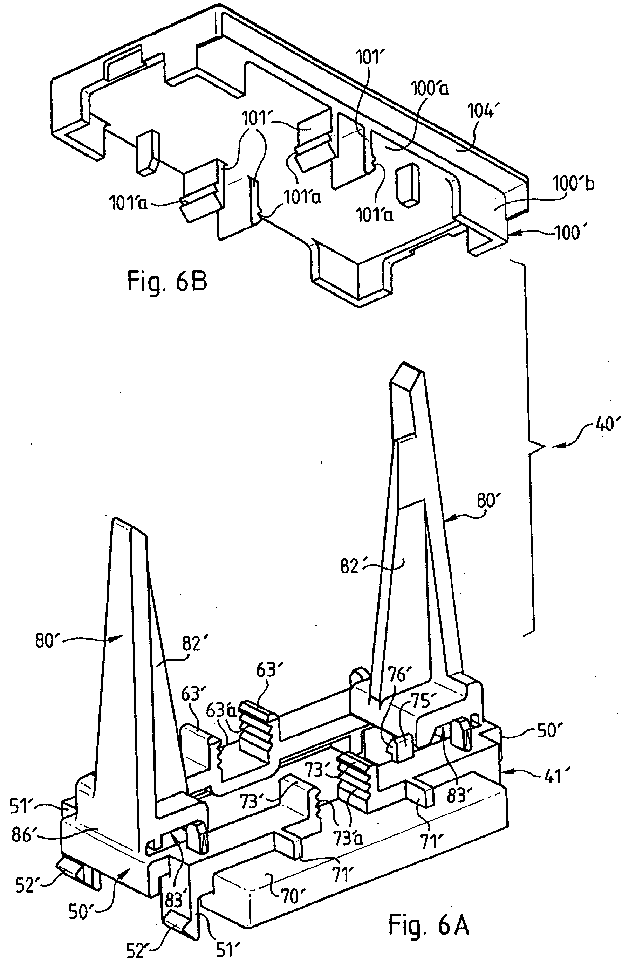

Sur les figures 6A, 6B, 7, on a représenté une variante de l'accessoire d'immobilisation 40'.

Selon cette variante, l'accessoire d'immobilisation 40' comporte un élément rigide 41' pratiquement identique à l'élément rigide 41 de l'accessoire d'immobilisation 40 décrit précédemment.

Cet élément rigide 41' comporte, sur deux côtés latéraux opposés, des parties plates en saillie 50' formant crochets destinées à s'engager dans les gorges longitudinales 16a, 16b correspondantes du socle de goulotte 11 et, de part et d'autre de chaque partie plate en saillie 50' formant crochet, des pattes souples 51' portant une dent 52' d'encliquetage destinée à coopérer avec chaque bande de clipsage 14a, 14b correspondante et plus particulièrement avec chaque nervure 14"a, 14"b faisant saillie vers l'intérieur du socle de goulotte 11, comme cela est plus particulièrement représenté sur la figure 7.

En outre, l'élément rigide 41' porte deux leviers de verrouillage 80' rattachés à un côté latéral de celui-ci par une partie souple 86' formant charnière d'articulation.

Chaque levier de verrouillage 80' est pratiquement identique au levier de verrouillage 80 de l'élément rigide 41. Il porte sur sa face intérieure une nervure longitudinale de raidissement 82' et, à son extrémité située du côté de la partie plate en saillie 50' formant crochet, une surface d'appui 83' ici présentant sensiblement un profil en forme de C destiné à prendre appui contre la bande de clipsage 14a, 14b correspondante dans une position de verrouillage telle que représentée sur la figure 7.

Ici aussi, chaque levier de verrouillage 80' est apte à pivoter par l'intermédiaire de sa partie souple 86' formant charnière d'articulation entre deux positions, à savoir une position relevée correspondant à la position de repos dans laquelle chaque surface d'appui 83' est située à distance de la bande de clipsage 14a, 14b correspondante et une position rabattue correspondant à la position de verrouillage dans laquelle chaque surface d'appui 83' est destinée à s'appliquer contre la bande de clipsage 14a, 14b correspondante en exerçant un effort de pression sur celle-ci pour bloquer en position l'élément rigide 41' sur le socle de goulotte 11.

L'élément rigide 41' comporte également, comme l'élément rigide 41, sur chaque côté longitudinal perpendiculaire aux côtés latéraux opposés, un bandeau d'appui 70' jouant le même rôle que les bandeaux d'appui 70, 60 de l'élément rigide 41.

En particulier, le bandeau d'appui 70' le plus large porte également en saillie des butées 71' destinées au positionnement d'un appareillage électrique 30.

La différence essentielle entre l'élément rigide 41' et l'élément rigide 41 réside au niveau des moyens d'encliquetage du capuchon 100'.

En effet, sur l'élément rigide 41', il est prévu, de part et d'autre de la paroi médiane non référencée, un couple de pattes 63', 73' en regard portant une série de crantages 63'a, 73'a destinés à coopérer avec des crans complémentaires 101'a prévus sur des pattes 101' portées en saillie par la paroi centrale de recouvrement 100'a du capuchon 100'.

L'élément rigide 41' porte également en saillie des crochets 65', 75', 76' destinés à coopérer avec chaque levier de verrouillage 80' pour le maintenir en position de verrouillage, rabattu sur l'élément rigide 41'.

Le capuchon 100' destiné à coopérer avec l'élément rigide 41' est légèrement différent du capuchon 100. Il porte sur un côté longitudinal une casquette 104' identique à celle du capuchon 100 et sur son pourtour une paroi 100'b destinée à recouvrir les quatre coins de l'élément rigide 41'. En son centre, la paroi centrale de recouvrement 100'a porte sur sa face interne les pattes 101' déjà décrites.

Sur la figure 13, on a représenté une autre variante de l'accessoire d'immobilisation 40".

Selon cette variante, l'accessoire d'immobilisation 40" ne comporte pas de capuchon rapporté, un des deux leviers de verrouillage 80'" étant agencé de manière à faire office d'un tel capuchon.

Les deux leviers de verrouillages 80", 80"' sont alors différents.

Le levier de verrouillage 80"', situé à gauche sur la figure 13, présente la forme d'un rectangle dont la surface est équivalente à la surface de la paroi centrale de recouvrement du capuchon 100 décrit précédemment.

Une fois rabattu, le levier de verrouillage 80'" recouvre l'ensemble de l'élément rigide 41".

Pour ce faire, la charnière d'articulation 86'" dudit levier de verrouillage 80"' présente une hauteur plus importante que celle de la charnière d'articulation 86 du levier de verrouillage 80, afin d'éloigner l'axe d'articulation dudit levier de verrouillage 80'" du socle de goulotte 11 et permettre ainsi à la face externe 80"'a de celui-ci de se placer à effleurement des faces externes des enjoliveurs après que le levier de verrouillage 80'" ait été placé en position de verrouillage.

Bien entendu, la surface d'appui (non visible sur la figure 13) de ce levier de verrouillage 80'" est agencée en tenant compte du relèvement de l'axe d'articulation de celui-ci.

L'autre levier de verrouillage 80", situé à droite sur la figure 13, est pratiquement identique au levier de verrouillage 80 décrit précédemment, mis à part qu'il présente une plus courte longueur pour ne pas gêner la manoeuvre du levier de verrouillage 80"' formant également capuchon de l'accessoire d'immobilisation.

Ce levier de verrouillage 80" est verrouillé en premier sur l'élément rigide 41", la dent 76" portée par la patte rigide 75" venant prendre appui sur la face externe 80"a dudit levier de verrouillage 80".

Le levier de verrouillage 80"' est alors rabattu sur l'élément rigide 41" de façon à recouvrir ledit levier de verrouillage 80" et à s'encliqueter sur ledit élément rigide 41".

Selon une autre variante non représentée de l'accessoire d'immobilisation selon laquelle on supprime le capuchon rapporté, on pourrait prévoir que les deux axes d'articulation des leviers de verrouillage soient relevés de manière que les faces externes de ces derniers viennent à effleurement de la face externe de chaque enjoliveur, lorsque lesdits leviers sont rabattus sur l'élément rigide. La forme des deux leviers de verrouillage est alors adaptée en conséquence pour que, par complémentarité, ils forment une surface rectangulaire équivalente à celle de la paroi centrale de recouvrement du capuchon 100.

En particulier, on pourra prévoir, selon des variantes non représentées de l'invention, que l'élément rigide de l'accessoire d'immobilisation comporte un seul levier de verrouillage.

On pourra également prévoir que l'élément rigide de l'accessoire d'immobilisation selon l'invention comporte deux leviers de verrouillage différents.

On pourra également prévoir, selon une variante non représentée, que les bandeaux d'appui prévus sur les côtés longitudinaux de l'élément rigide de l'accessoire d'immobilisation présentent des largeurs identiques.

On pourra également prévoir que les deux leviers de verrouillage de l'élément rigide présentent un axe d'articulation commun situé sensiblement au centre de l'élément rigide. Dans ce cas, chaque levier de verrouillage présente un mouvement combiné de pivotement et de translation, l'ensemble des deux leviers de verrouillage fonctionnant sensiblement selon une genouillère entre une position de repos dans laquelle ils sont relevés tout en étant inclinés l'un par rapport à l'autre et une position de verrouillage où ils sont rabattus. L'axe d'articulation ainsi se déplace selon un axe sensiblement perpendiculaire à l'élément rigide mis en place entre les parois longitudinales du socle de goulotte.

Enfin, on pourra également prévoir que chaque levier de verrouillage pivote dans un plan sensiblement parallèle au fond du socle de goulotte, autour d'un axe perpendiculaire au fond du socle. Dans ce cas, la position de repos de chaque levier de verrouillage est une position écartée latéralement de l'axe de l'élément rigide, et la position de verrouillage est une position rapprochée dans laquelle il s'étend sensiblement suivant l'axe de l'élément rigide.

## Revendications

1. Accessoire d'immobilisation (40 ; 40') d'au moins un appareillage électrique (30) rapporté dans une ouverture longitudinale (12) d'un socle de goulotte (11) en étant clipsé directement sur des bandes de clipsage (14a, 14b) parallèles bordant ladite ouverture longitudinale (12), ledit accessoire comprenant un élément rigide (41 ; 41') apte à être rapporté, à côté d'un tel appareillage, transversalement dans ladite ouverture longitudinale (12) du socle de goulotte (11) pour stabiliser localement la largeur de ladite ouverture longitudinale, cet élément rigide (41 ; 41') comprenant, sur deux côtés parallèles, des moyens d'accrochage (50, 51 ; 50', 51') destinés à coopérer avec lesdites bandes de clipsage (14a, 14b), **caractérisé en ce que** ledit élément rigide (41 ; 41') porte au moins un levier de verrouillage (80 ; 80') dont une extrémité est pourvue d'une surface d'appui (83 ; 83') sur une desdites bandes de clipsage (14a, 14b), ledit levier de verrouillage (80 ; 80') étant apte à pivoter entre deux positions, à savoir une position de repos dans laquelle ladite surface d'appui (83 ; 83') est placée à distance de ladite bande de clipsage (14a, 14b) et une position de verrouillage dans laquelle ladite surface d'appui (83 ; 83') s'applique contre ladite bande de clipsage (14a, 14b) en exerçant un effort de pression sur celle-ci pour bloquer ledit élément rigide (41 ; 41') en position sur le socle de goulotte (11).

2. Accessoire d'immobilisation (40 ; 40') selon la revendication 1, **caractérisé en ce que** la surface d'appui (83 ; 83') de chaque levier de verrouillage (80 ; 80') est conformée de manière à prendre également appui sous la bande de clipsage (14a, 14b) correspondante.

3. Accessoire d'immobilisation (40') selon la revendication 2, **caractérisé en ce que** la surface d'appui (83') de chaque levier de verrouillage (80') présente un profil sensiblement en forme de C.

4. Accessoire d'immobilisation (40) selon la revendication 2, **caractérisé en ce que** la surface d'appui (83) de chaque levier de verrouillage (80) présente un profil en forme d'angle droit.

5. Accessoire d'immobilisation (40) selon l'une des revendications 1 à 4, **caractérisé en ce que** la surface d'appui (83) de chaque levier de verrouillage (80) porte au moins une nervure (84).

6. Accessoire d'immobilisation (40) selon la revendication 5, **caractérisé en ce que** la surface d'appui (83) de chaque levier de verrouillage (80) porte une pluralité de nervures (84) disposées parallèlement les unes aux autres.

7. Accessoire d'immobilisation (40 ; 40') selon l'une des revendications 1 à 6, **caractérisé en ce que** chaque levier de verrouillage (80 ; 80') est d'un seul tenant avec l'élément rigide (41 ; 41') et est relié à ce dernier par une partie souple (86 ; 86') formant charnière d'articulation.

8. Accessoire d'immobilisation selon l'une des revendications 1 à 6, **caractérisé en ce que** chaque levier de verrouillage est rapporté sur l'élément rigide par l'intermédiaire de moyens de montage formant charnière d'articulation.

9. Accessoire d'immobilisation (40 ; 40') selon l'une des revendications 1 à 8, **caractérisé en ce qu'**il est prévu deux leviers de verrouillage (80 ; 80').

10. Accessoire d'immobilisation (40 ; 40' selon la revendication 9, **caractérisé en ce que** les deux leviers de verrouillage (80 ; 80') présentent des axes d'articulation distincts.

11. Accessoire d'immobilisation selon la revendication 9, **caractérisé en ce que** les deux leviers de verrouillage présentent un axe d'articulation commun.

12. Accessoire d'immobilisation (40 ; 40') selon l'une des revendications 9 à 11, **caractérisé en ce que** les deux leviers de verrouillage (80 ; 80') sont identiques.

13. Accessoire d'immobilisation selon l'une des revendications 9 à 11, **caractérisé en ce que** les deux leviers de verrouillage sont différents.

14. Accessoire d'immobilisation (40 ; 40') selon l'une des revendications 1 à 13, **caractérisé en ce que** l'élément rigide (41 ; 41') porte, en saillie, un crochet (62, 76 ; 65') coopérant avec ledit levier de verrouillage (80 ; 80') pour le maintenir en position de verrouillage.

15. Accessoire d'immobilisation (40 ; 40') selon l'une des revendications 1 à 14, **caractérisé en ce que** chaque levier de verrouillage (80 ; 80') pivote dans un plan perpendiculaire au fond du socle de goulotte de sorte que la position de repos de chaque levier de verrouillage (80 ; 80') est une position relevée dans laquelle il s'élève sensiblement perpendiculairement audit élément rigide, et la position de verrouillage de chaque levier de verrouillage (80 ; 80') est une position rabattue dans laquelle il s'étend dans le plan de l'élément rigide.

16. Accessoire d'immobilisation selon l'une des revendications 1 à 14, **caractérisé en ce que** chaque levier de verrouillage pivote dans un plan sensiblement parallèle au fond du socle de goulotte de sorte que la position de repos de chaque levier de verrouillage est une position écartée latéralement de l'axe de l'élément rigide, et la position de verrouillage est une position rapprochée dans laquelle il s'étend sensiblement suivant l'axe de l'élément rigide.

17. Accessoire d'immobilisation (40 ; 40') selon l'une des revendications précédentes, **caractérisé en ce qu'**il comporte un capuchon (100 ; 100') à rapporter par encliquetage sur l'élément rigide (41 ; 41').

18. Accessoire d'immobilisation (40 ; 40') selon la revendication 17, **caractérisé en ce qu'**il est prévu, sur une des deux pièces constituées par le capuchon (100 ; 100') et l'élément rigide (41 ; 41'), une série de crantages (101 a ; 101'a) destinés à coopérer avec un cran complémentaire ( 73 ; 63'a ; 73'a) prévu sur l'autre des deux pièces de sorte que le capuchon (100 ; 100') peut prendre différentes positions suivant une direction perpendiculaire à l'axe longitudinal du socle de goulotte (11) par rapport à l'élément rigide (41 ; 41').

19. Accessoire d'immobilisation (40") selon l'une des revendications 1 à 16, **caractérisé en ce qu'**au moins un levier de verrouillage (80"') fait office de capuchon de l'élément rigide (41").

20. Accessoire d'immobilisation (40 ; 40') selon l'une des revendications précédentes, **caractérisé en ce que** ledit élément rigide (41 ; 41') comporte, le long d'au moins un côté perpendiculaire à ceux qui comprennent lesdits moyens d'accrochage, un bandeau d'appui (70 ; 70') conformé pour venir se placer sous un enjoliveur d'un appareillage électrique rapporté dans l'ouverture longitudinale du socle de goulotte.

21. Accessoire d'immobilisation (40 ; 40') selon la revendication 20, **caractérisé en ce que** ledit élément rigide (41 ; 41') comporte, le long de chaque côté perpendiculaire à ceux qui comprennent lesdits moyens d'accrochage, un bandeau d'appui (60, 70 ; 70').

22. Accessoire d'immobilisation selon la revendication 21, **caractérisé en ce que** les deux bandeaux d'appui présentent des largeurs identiques.

23. Accessoire d'immobilisation (40) selon la revendication 21, **caractérisé en ce que** les deux bandeaux d'appui (60, 70) présentent des largeurs différentes.

24. Accessoire d'immobilisation (40 ; 40') selon l'une des revendications 20 à 23, **caractérisé en ce que** l'élément rigide (41 ; 41') comporte sur au moins un bandeau d'appui (70 ; 70') des moyens de butée et de positionnement (71 ; 71') d'un appareillage électrique monté dans l'ouverture longitudinale du socle de goulotte.

## Patentansprüche

1. Zubehör (40; 40') zum Fixieren wenigstens eines elektrischen Installationsgerätes (30), das in einer Längsöffnung (12) eines Installationskanalsockels (11) eingesetzt und dabei unmittelbar auf zueinander parallelen, die Längsöffnung (12) begrenzenden Klemmstreifen (14a, 14b) festgeklemmt ist, wobei das Zubehör ein starres Element (41; 41') umfasst, das neben einem solchen Installationsgerät quer in der Längsöffnung (12) des Installationskanalsockels (11) einsetzbar ist, um die Breite der Längsöffnung lokal zu stabilisieren, wobei das starre Element (41; 41') auf zwei zueinander parallelen Seiten Einrastmittel (50, 51; 50', 51') umfasst, die dazu bestimmt sind, mit den Klemmstreifen (14a, 14b) zusammenzuwirken,
**dadurch gekennzeichnet, dass** das starre Element (41; 41') wenigstens mit einem Verriegelungshebel (80; 80') versehen ist, dessen Ende mit einer Fläche (83; 83') zur Auflage auf einem der Klemmstreifen (14a, 14b) versehen ist, wobei der Verriegelungshebel (80; 80') zwischen zwei Stellungen zu schwenken vermag, nämlich einer Ruhestellung, in der die Auflagefläche (83; 83') mit Abstand zu dem Klemmstreifen (14a, 14b) platziert ist, und einer verriegelten Stellung, in der die Auflagefläche (83; 83') gegen den Klemmstreifen (14a, 14b) gedrückt wird und dabei auf diesen eine Druckkraft ausübt, um das starre Element (41; 41') in dieser Position auf dem Installationskanalsockel (11) festzuklemmen.

2. Fixierzubehör (40; 40') nach Anspruch 1,
**dadurch gekennzeichnet, dass** die Auflagefläche (83; 83') eines jeden Verriegelungshebels (80, 80') derart ausgebildet ist, dass sie auch unter dem entsprechenden Klemmstreifen (14a, 14b) zur Anlage gelangt.

3. Fixierzubehör (40') nach Anspruch 2,
**dadurch gekennzeichnet, dass** die Auflagefläche (83') eines jeden Verriegelungshebels (80') ein im Wesentlichen C-förmiges Profil aufweist.

4. Fixierzubehör (40) nach Anspruch 2,
**dadurch gekennzeichnet, dass** die Auflagefläche (83) eines jeden Verriegelungshebels (80) ein rechtwinkliges Profil aufweist.

5. Fixierzubehör (40) nach einem der Ansprüche 1 bis 4,
**dadurch gekennzeichnet, dass** die Auflagefläche (83) eines jeden Verriegelungshebels (80) mit wenigstens einer Rippe (84) versehen ist.

6. Fixierzubehör (40) nach Anspruch 5,
**dadurch gekennzeichnet, dass** die Auflagefläche (83) eines jeden Verriegelungshebels (80) mit einer Vielzahl von Rippen (84) versehen ist, die parallel zueinander angeordnet sind.

7. Fixierzubehör (40; 40') nach einem der Ansprüche 1 bis 6,
**dadurch gekennzeichnet, dass** jeder Verriegelungshebel (80; 80') einstückig mit dem starren Element (41, 41') ausgebildet und mit diesem durch ein flexibles Teil (86, 86') verbunden ist, das ein Gelenkscharnier bildet.

8. Fixierzubehör nach einem der Ansprüche 1 bis 6,
**dadurch gekennzeichnet, dass** jeder Verriegelungshebel auf dem starren Element durch Befestigungsmittel aufgesetzt ist, die ein Gelenkscharnier bilden.

9. Fixierzubehör (40; 40') nach einem der Ansprüche 1 bis 8,
**dadurch gekennzeichnet, dass** zwei Verriegelungshebel (80; 80') vorgesehen sind.

10. Fixierzubehör (40; 40') nach Anspruch 9,
**dadurch gekennzeichnet, dass** die beiden Verriegelungshebel (80; 80') separate Drehachsen aufweisen.

11. Fixierzubehör nach Anspruch 9,
**dadurch gekennzeichnet, dass** die beiden Verriegelungshebel eine gemeinsame Drehachse aufweisen.

12. Fixierzubehör (40; 40') nach einem der Ansprüche 9 bis 11,
**dadurch gekennzeichnet, dass** die beiden Verriegelungshebel (80; 80') identisch sind.

13. Fixierzubehör nach einem der Ansprüche 9 bis 11,
**dadurch gekennzeichnet, dass** die beiden Verriegelungshebel verschieden sind.

14. Fixierzubehör (40; 40') nach einem der Ansprüche 1 bis 13,
**dadurch gekennzeichnet, dass** das starre Element (41; 41') vorstehend mit einem Haken (62, 76; 65') versehen ist, der mit dem Verriegelungshebel (80; 80') zusammenwirkt, um diesen in der verriegelten Stellung zu halten.

15. Fixierzubehör (40; 40') nach einem der Ansprüche 1 bis 14,
**dadurch gekennzeichnet, dass** jeder Verriegelungshebel (80; 80') in einer zum Boden des Installationskanalsockels senkrechten Ebene schwenkt, derart, dass die Ruhestellung eines jeden Verriegelungshebels (80; 80') eine hochgeklappte Stellung ist, in der dieser sich im Wesentlichen senkrecht zu dem starren Element erhebt, und die verriegelte Stellung eines jeden Verriegelungshebels (80; 80') eine umgeklappte Stellung ist, in der dieser sich in der Ebene des starren Elements erstreckt.

16. Fixierzubehör nach einem der Ansprüche 1 bis 14,
**dadurch gekennzeichnet, dass** jeder Verriegelungshebel in einer zum Boden des Installationskanalsockels im Wesentlichen parallelen Ebene schwenkt, derart, dass die Ruhestellung eines jeden Verriegelungshebels eine von der Achse des starren Elements seitlich abgerückte Stellung ist und die verriegelte Stellung eine angenäherte Stellung ist, in der dieser sich im Wesentlichen längs der Achse des starren Elements erstreckt.

17. Fixierzubehör (40; 40') nach einem der vorhergehenden Ansprüche,
**dadurch gekennzeichnet, dass** es eine auf dem starren Element (41, 41') durch Einrasten aufsetzbare Abdeckkappe (100; 100') umfasst.

18. Fixierzubehör (40; 40') nach Anspruch 17,
**dadurch gekennzeichnet, dass** auf einem der beiden aus der Abdeckkappe (100; 100') und dem starren Element (41; 41') bestehenden Teile eine Reihe von Rastungen (101a; 101'a) vorgesehen ist, die dazu bestimmt sind, mit einer komplementären Raste (73; 63'a; 73'a) zusammenzuwirken, die auf dem anderen der beiden Teile vorgesehen ist, derart, dass die Abdeckkappe (100; 100') bezüglich des starren Elements (41; 41') unterschiedliche Stellungen in einer zur Längsachse des Installationskanalsockels (11) senkrechten Richtung einnehmen kann.

19. Fixierzubehör (40") nach einem der Ansprüche 1 bis 16,
**dadurch gekennzeichnet, dass** wenigstens ein Verriegelungshebel (80"') als Abdeckkappe des starren Elements (41") dient.

20. Fixierzubehör (40; 40') nach einem der vorhergehenden Ansprüche,
**dadurch gekennzeichnet, dass** das starre Element (41; 41') entlang wenigstens einer Seite, die zu den die Einrastmittel umfassenden senkrecht verläuft, eine Auflageleiste (70; 70') aufweist, die so ausgebildet ist, dass diese unter einer Zierblende eines in der Längsöffnung des Installationskanalsockels eingesetzten elektrischen Installationsgeräts platziert werden kann.

21. Fixierzubehör (40; 40') nach Anspruch 20,
**dadurch gekennzeichnet, dass** das starre Element (41, 41') entlang jeder Seite, die zu den die Einrastmittel umfassenden senkrecht verläuft, eine Auflageleiste (60, 70; 70') aufweist.

22. Fixierzubehör nach Anspruch 21,
**dadurch gekennzeichnet, dass** die beiden Auflageleisten gleiche Breiten haben.

23. Fixierzubehör (40) nach Anspruch 21,
**dadurch gekennzeichnet, dass** die beiden Auflageleisten (60, 70) unterschiedliche Breiten haben.

24. Fixierzubehör (40; 40') nach einem der Ansprüche 20 bis 23,
**dadurch gekennzeichnet, dass** das starre Element (41; 41') auf wenigstens einer Auflageleiste (70; 70') Anschlags- und Positionierungsmittel (71; 71') für ein elektrisches Installationsgerät aufweist, das in der Längsöffnung des Installationskanalsockels befestigt ist.

## Claims

1. Accessory (40; 40') for immobilising at least one electrical device (30) that is fitted into a longitudinal opening (12) in a duct base (11) by being clipped directly to parallel clipping strips (14a, 14b) surrounding said longitudinal opening (12), said accessory including a rigid member (41; 41') that is capable of being fitted transversely into said longitudinal opening (12) in the duct base (11) beside such a device in order to locally stabilise the width of said longitudinal opening, said rigid member (41; 41') having, on two parallel sides, attachment means (50, 51; 50', 51') that are intended to cooperate with said clipping strips (14a, 14b), **characterised in that** said rigid member (41; 41') has at least one locking lever (80; 80'), one end of which is provided with a surface (83; 83') for bearing on one of said clipping strips (14a, 14b), said locking lever (80; 80') being capable of pivoting between two positions, namely a rest position in which said bearing surface (83; 83') is at a distance from said clipping strip (14a, 14b) and a locking position in which said bearing surface (83; 83') is pressed against said clipping strip (14a, 14b), exerting pressure thereon to lock said rigid member (41; 41') in position on the duct base (11).

2. Immobilisation accessory (40; 40') according to claim 1, **characterised in that** the bearing surface (83; 83') of each locking lever (80; 80') is designed to also bear under the corresponding clipping strip (14a, 14b).

3. Immobilisation accessory (40') according to claim 2, **characterised in that** the bearing surface (83') of each locking lever (80') has a substantially C-shaped profile.

4. Immobilisation accessory (40) according to claim 2, **characterised in that** the bearing surface (83) of each locking lever (80) has a right-angled profile.

5. Immobilisation accessory (40) according to any of claims 1 to 4, **characterised in that** the bearing surface (83) of each locking lever (80) has at least one rib (84).

6. Immobilisation accessory (40) according to claim 5, **characterised in that** the bearing surface (83) of each locking lever (80) has a plurality of ribs (84) arranged in parallel.

7. Immobilisation accessory (40; 40') according to any of claims 1 to 6, **characterised in that** each locking lever (80; 80') is formed in one piece with the rigid member (41; 41') and is connected thereto by a flexible portion (86; 86') forming a hinge.

8. Immobilisation accessory according to any of claims 1 to 6, **characterised in that** each locking lever is attached to the rigid member by mounting means forming a hinge.

9. Immobilisation accessory (40; 40') according to any of claims 1 to 8, **characterised in that** two locking levers (80; 80') are provided.

10. Immobilisation accessory (40; 40') according to claim 9, **characterised in that** the two locking levers (80; 80') have separate articulation axes.

11. Immobilisation accessory according to claim 9, **characterised in that** the two locking levers have a common articulation axis.

12. Immobilisation accessory (40; 40') according to any of claims 9 to 11, **characterised in that** the two locking levers (80; 80') are identical.

13. Immobilisation accessory according to any of claims 9 to 11, **characterised in that** the two locking levers are different.

14. Immobilisation accessory (40; 40') according to any of claims 1 to 13, **characterised in that** the rigid member (41; 41') has a projecting hook (62, 76; 65') that engages with said locking lever (80; 80') to hold it in a locking position.

15. Immobilisation accessory (40; 40') according to any of claims 1 to 14, **characterised in that** each locking lever (80; 80') pivots in a plane perpendicular to the bottom of the duct base so that the rest position of each locking lever (80; 80') is a raised position in which it raises substantially perpendicularly to said rigid member, and the locking position of each locking lever (80; 80') is a lowered position in which it extends in the plane of the rigid member.

16. Immobilisation accessory according to any of claims 1 to 14, **characterised in that** each locking lever pivots in a plane substantially parallel to the bottom of the duct base so that the rest position of each locking lever is a position in which it is at a lateral spacing from the axis of the rigid member, and the locking position is a close position in which it extends substantially along the axis of the rigid member.

17. Immobilisation accessory (40; 40') according to any of the preceding claims, **characterised in that** it comprises a cap (100; 100') that can be clipped onto the rigid member (41; 41').

18. Immobilisation accessory (40; 40') according to claim 17, **characterised in that**, on one of the two parts formed by the cap (100; 100') and the rigid member (41; 41'), a series of notches (101 a; 101'a) are provided that are intended to engage with a complementary detent (73; 63'a; 73'a) provided on the other of the two parts so that the cap (100; 100') can assume different positions relative to the rigid member (41; 41') in a direction perpendicular to the longitudinal axis of the duct base (11).

19. Immobilisation accessory (40") according to any of claims 1 to 16, **characterised in that** at least one locking lever (80"') acts as a cap for the rigid member (41 ").

20. Immobilisation accessory (40; 40') according to any of the preceding claims, **characterised in that** said rigid member (41; 41') has, along at least one side perpendicular to those that comprise said attachment means, a bearing portion (70; 70') that is shaped to assume a position under a cover of an electrical device that is fitted into the longitudinal opening in the duct base.

21. Immobilisation accessory (40; 40') according to claim 20, **characterised in that** said rigid member (41; 41') has a bearing portion (60, 70; 70') along each side that is perpendicular to those that comprise said attachment means.

22. Immobilisation accessory according to claim 21, **characterised in that** the two bearing portions are the same width.

23. Immobilisation accessory (40) according to claim 21, **characterised in that** the two bearing portions (60, 70) are different widths.

24. Immobilisation accessory (40; 40') according to any of claims 20 to 23, **characterised in that** the rigid member (41; 41') has, on at least one bearing portion (70; 70'), means (71; 71') for contacting and positioning an electrical device mounted in the longitudinal opening in the duct base.
